(19) Europäisches Patentamt
European Patent Office
Office européen des brevets

(11) **EP 3 329 256 B1**

(12) **EUROPÄISCHE PATENTSCHRIFT**

(45) Veröffentlichungstag und Bekanntmachung des Hinweises auf die Patenterteilung:
**21.09.2022 Patentblatt 2022/38**

(21) Anmeldenummer: **16754174.7**

(22) Anmeldetag: **27.07.2016**

(51) Internationale Patentklassifikation (IPC):
**G01N 21/64** (2006.01)    **G02B 21/00** (2006.01)
**G02B 21/16** (2006.01)    **G02B 21/36** (2006.01)
**G02B 27/58** (2006.01)

(52) Gemeinsame Patentklassifikation (CPC):
**G01N 21/6408; G01N 21/6458; G02B 21/0076; G02B 21/008; G02B 21/16; G02B 21/367; G02B 27/58**

(86) Internationale Anmeldenummer:
**PCT/DE2016/100341**

(87) Internationale Veröffentlichungsnummer:
**WO 2017/020887 (09.02.2017 Gazette 2017/06)**

(54) **VERFAHREN ZUR ERZEUGUNG EINES DIGITALEN FLUORESZENZBILDES**

METHOD FOR GENERATING A DIGITAL FLUORESCENCE IMAGE

PROCÉDÉ POUR GÉNÉRER UNE IMAGE DE FLUORESCENCE NUMÉRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2015 DE 102015112628**

(43) Veröffentlichungstag der Anmeldung:
**06.06.2018 Patentblatt 2018/23**

(73) Patentinhaber: **Carl Zeiss Microscopy GmbH 07745 Jena (DE)**

(72) Erfinder:
• **KALKBRENNER, Thomas**
  **07745 Jena (DE)**
• **WOLLESCHENSKY, Ralf**
  **07743 Jena (DE)**

(74) Vertreter: **Schaller, Renate**
**Gleim Petri Oehmke**
**Patent- und Rechtsanwaltspartnerschaft mbB**
**Neugasse 13**
**07743 Jena (DE)**

(56) Entgegenhaltungen:
**DE-A1-102011 077 269**    **DE-A1-102011 084 315**
**US-A1- 2010 303 386**

**Beschreibung**

Die Erfindung betrifft ein Verfahren, mit dem von einer mit einem fluoreszierenden Farbstoff versehenen Probe ein digitales Fluoreszenzbild (elektronische Bilddatei) erzeugt wird.

Die Fluoreszenzmikroskopie ist eine sehr effektive Methode der Lichtmikroskopie zur Lokalisierung von Proteinen und Abbildung von Proteinverteilungen innerhalb von Gewebeproben und Zellen (nachfolgend Probe). Dazu werden gezielt fluoreszierende Farbstoffe der zu mikroskopierenden Probe zugeführt, welche an den Proteinen andocken. Durch die Beleuchtung mit Licht (Anregungslicht) einer bestimmten Wellenlänge (Anregungswellenlänge), abhängig vom verwendeten Farbstoff, wird dieser angeregt und Elektronen der Farbstoffmoleküle (Fluorophore) werden auf ein höheres Energieniveau gehoben. Nach einer kurzen Verweilzeit gelangen die angeregten Elektronen jeweils unter Emission von Licht (Emissionslicht) einer spezifischen Wellenlänge (Emissionswellenlänge), die länger als die Anregungswellenlänge ist, wieder auf ihr ursprüngliches Niveau. Ein einzelnes Elektron gibt dabei ein Lichtquant oder Photon ab. Diese Eigenschaft wird genutzt, um die Proteine oder auch andere Stoffe sichtbar zu machen.

Fluoreszenzmikroskope, sofern sie nicht ausschließlich einer visuellen Betrachtung der Probe dienen, werden in klassische Weitfeld-Mikroskope, mit einer Kamera, eine Vielzahl von in einer Matrix angeordneten Detektoren umfassend, und in Laser-Scanning-Mikroskope, nur einen einzelnen Detektor aufweisend, unterteilt. Beide Arten von Mikroskopen sind heutzutage üblich, wobei die Laser-Scanning-Mikroskope viele Vorteile gegenüber den klassischen Weitfeld-Fluoreszenzmikroskopen haben.

In der US 2010/303386 A1 wird ein Verfahren zur Erzeugung eines digitalen Fluoreszenzbildes offenbart. Dabei wird eine mit einem fluoreszierenden Stoff versehene Probe in einer Objektebene (Gesichtsfeld) eines Laser-Scanning-Mikroskops angeordnet und das Gesichtsfeld mit Hilfe des Laser-Scanning-Mikroskops abgebildet. Das Gesichtsfeld wird mehrfach, Bild für Bild, zu bestimmten Zeitpunkten abgebildet.

Laser-Scanning-Mikroskope sind in der Regel konfokale Mikroskope, das heißt der Fokus des Anregungslichtes, der in die Objektebene gelegt wird, wird in eine konjugierte Ebene, die Bildebene, abgebildet, wo ein einzelner Detektor, in der Regel mit einer vorgeordneten Lochblende, positioniert ist. Dadurch wird nur Emissionslicht eines winzigen Objektfeldausschnittes, also eines winzigen Pixels auf den Detektor geleitet. Dies hat gegenüber einem klassischen Weitfeld-Fluoreszenzmikroskop den einscheidenden Vorteil, dass ausschließlich aus der Fokusebene kommende Lichtquanten des Emissionslichtes detektiert werden und zur Signalbildung beitragen. Auf diese Weise können Proben schichtweise mikroskopiert werden und die aus den Signalen pro mikroskopierter Schicht generierten Fluoreszenzbilder zu einem dreidimensionalen Bild zusammengesetzt werden.

Die Fluoreszenzbilder pro Schicht werden gewonnen, indem das Objektfeld durch ein Laserscan-System, üblicherweise bestehend aus zwei galvanometrischen Spiegeln, mit einer Scanfrequenz abgerastert wird, aus der sich pro Pixel eine Pixelverweilzeit ergibt. Das während der Pixelverweilzeit durch den Detektor empfangene Emissionslicht wird durch diesen in elektrische analoge Detektorsignale umgewandelt, die über die Kenntnis der jeweiligen Position des Laserscan-Systems jeweils einem Pixel zugeordnet werden. Die analogen Detektorsignale werden zunächst mit einer vorgegebenen Taktfrequenz digitalisiert. Dafür sind im Bereich der Laserscanning-Mikroskopie grundsätzlich zwei Arten der Digitalisierung bekannt.

Eine erste Art der Digitalisierung ist die Integration über das analoge Detektorsignal. Sie wird angewendet, wenn die Dauer der Signaldetektion (Detektionszeit) in der gleichen Größenordnung wie die Pixelverweilzeit liegt, dass heißt die Detektionszeit nur unwesentlich kürzer ist als die Pixelverweilzeit. Aus dem hier über das Analogsignal gebildeten Integralwert und der Detektionszeit lässt sich mit einem einmaligen Auslesen des Detektors ein Mittelwert pro Pixel ableiten (Mittelwertamplitude), der eine dem Pixel zugeordnete Gesamtamplitude darstellt.

In der Vergangenheit wurde auf Grund der nur geringen Strahlungsintensität der fluoreszierenden Farbstoffe insbesondere diese Methode der Integration angewendet, da eine vergleichsweise hohe Gesamtamplitude gebildet werden kann.

Eine zweite Art der Digitalisierung ist das schnelle Abtasten (sampling) des analogen Detektorsignals. Sie wird bevorzugt angewendet, wenn die Detektionszeit deutlich kürzer, insbesondere um Größenordnungen kürzer im Vergleich zur Pixelverweilzeit ist. Über die Pixelverweilzeit wird dann zu einer Vielzahl von Messzeitpunkten (die Dauer der Signaldetektion wird vereinfacht als ein Zeitpunkt betrachtet, bzw. der Messzeitpunkt ist der Zeitpunkt des Auslesens des Detektors) jeweils eine Amplitude generiert und aus der Folge der Amplituden ein Mittelwert (Mittelwertamplitude) gebildet, der als Gesamtamplitude jeweils einem Pixel zugeordnet wird.

Dieses schnelle Abtasten ist heute in der Laserscanning-Mikroskopie üblich, da bei Verwendung moderner A/D-Wandler die Vorteile des Verfahrens überwiegen. Typischerweise wird das Detektorsignal mit einer konstanten Abtastrate gewandelt, die deutlich, bevorzugt wenigstens eine Größenordnung, insbesondere zwei Größenordnungen, höher ist als die kürzest mögliche Pixelverweilzeit. Die Anzahl der Messezeitpunkte je Pixel ergibt sich dann aus der Pixelverweilzeit. Diese wiederum wird durch die Scan-Einstellung (Bildrate, Pixelzahl, Scangröße) festgelegt. Eine Erhöhung der Pixelverweilzeit führt dann zu einer Erhöhung der Anzahl der Messzeitpunkte je Pixel.

Um das Signal-Rausch-Verhältnis zu verbessern, wird üblicherweise die Pixelverweilzeit erhöht. Nachteilig ist, dass damit die Gesamtzeit zur Gewinnung eines Fluoreszenzbildes, welches aus den Gesamtamplituden für alle Pixel in Form einer Rastergrafik gebildet wird, erhöht und die Bildrate verringert wird. Das Signal-Rausch-Verhältnis wird bestimmt durch das Verhältnis der Anteile an der Gesamtamplitude, die zum einen durch das Emissionslicht und zum anderen durch das Rauschen verursacht sind.

Es ist die Aufgabe der Erfindung, ein Verfahren zu finden, welches bei Beibehaltung der Bildrate ein digitales Fluoreszenzbild mit einem verbesserten Signal-Rausch-Verhältnis liefert.

Diese Aufgabe wird durch ein Verfahren gemäß Anspruch 1 gelöst. Insbesondere wird diese Aufgabe für ein Verfahren zur Erstellung eines digitalen Fluoreszenzbildes, bei dem eine mit einem fluoreszierenden Farbstoff versehene Probe in einer Objektebene eines Laser-Scanning-Mikroskops angeordnet und zeitlich nacheinander pixelweise über eine Pixelverweilzeit mit einem Anregungslicht beaufschlagt wird, wodurch pro Pixel ein Emissionslicht generiert wird, gelöst. Das Emissionslicht pro Pixel wird von einem Detektor detektiert und durch schnelles Abtasten (sampling) in ein digitales Signal in Form einer Folge von jeweils einem Messzeitpunkt zugeordneten Amplituden gewandelt. Aus den Amplituden wird jeweils eine Gesamtamplitude pro Pixel gebildet. Die Gesamtamplituden aller Pixel werden zu einem Fluoreszenzbild zusammengefügt. Erfindungsgemäß wird die jeweils einem Pixel zugeordnete Gesamtamplitude aus einer oder mehreren Korrelationsamplituden ermittelt wird und somit das Rauschen quasi nicht in die Gesamtamplitude eingeht, sodass ein Fluoreszenzbild mit einem höheren Signal-Rausch-Verhältnis entsteht.

Hierzu wird pro Pixel die Folge von Amplituden beginnend zu einem späteren Messzeitpunkt mit derselben Folge von Amplituden beginnend zu einem früheren Messzeitpunkt wenigstens einmal autokorreliert.

Die späteren Messzeitpunkte und die früheren Messzeitpunkte weisen dabei zueinander einen Zeitversatz auf. Das heißt anstelle nur einer Autokorrelation mit einem Zeitversatz kann die Folge von Amplituden mehrfach autokorreliert werden, wobei pro Autokorrelation ein anderer Zeitversatz zur Anwendung kommt. Pro Zeitversatz wird wenigstens eine für den Zeitversatz spezifische Korrelationsamplitude gebildet und die Gesamtamplitude wird aus der wenigstens einen gebildeten Korrelationsamplitude ermittelt. Die Anzahl der korrelierbaren Amplitudenpaare entspricht der Anzahl aller Messzeitpunkte pro Pixelverweilzeit abzüglich dem Zeitversatz.

Bevorzugt wird die Korrelationsamplitude mit der Formel:

$$K_\tau = ((I(t_n) - I_{mittel}) \times (I(t_m) - I_{mittel}))_{mittel}$$

berechnet. Dabei sind $I(t_n)$ die Amplituden der früheren Messzeitpunkte $t_n$, $I(t_m)$ die Amplituden der späteren Messzeitpunkte $t_m$, $m = n + \tau$ und $I_{mittel}$ ist eine Mittelwertamplitude, die sich als Mittelwert aller Amplituden berechnet.

Es ist von Vorteil, wenn die Korrelationsamplitude $K_\tau$ durch Division mit der quadratischen Mittelwertamplitude $I_{mittel}^2$ normiert wird.

Die Qualität des Fluoreszenzbildes kann verbessert werden, wenn die Korrelationsamplitude $K_\tau$ für verschiedene Zeitversatze $\tau$ berechnet wird und derjenige Zeitversatz $\tau$ mit der vergleichsweise größten Korrelationsamplitude $K_\tau$ festgestellt und als Gesamtamplitude verwendet wird.

Der der vergleichsweise größten Korrelationsamplitude $K_\tau$ zugeordnete Zeitversatz $\tau$ kann vorteilhaft dem fluoreszierenden Farbstoff zugeordnet in einer Datenbank abgelegt werden.

Alternativ kann die Korrelationsamplitude $K_\tau$ für verschiedene Zeitversatze $\tau$ berechnet werden und der Mittelwert der Korrelationsamplituden $K_\tau$ festgestellt und als Gesamtamplitude verwendet werden.

Auch kann die Korrelationsamplitude $K_\tau$ für verschiedene Zeitversatze $\tau$ berechnet werden und die Summe der Korrelationsamplituden $K_\tau$ wird festgestellt und als Gesamtamplitude verwendet.

Vorteilhaft ist die Anzahl der Messzeitpunkte größer 400 und der Zeitversatz $\tau$ liegt zwischen 50 und 150, sodass wenigstens 250 Amplitudenpaare korreliert werden.

Das erfindungsgemäße Verfahren macht es sich zunutze, dass die fluoreszierenden Farbstoffe beim Aussenden von Emissionslicht wenigstens einem korrelierenden Prozess unterliegen, das heißt das Fluoreszenzsignal, welches die Intensität des Emissionslichtes über die Dauer der Pixelverweilzeit darstellt, unterliegt wenigstens einer Funktion.

Bekannt als korrelierende Prozesse sind hier z. B. das Photoblinken und das Photobleichen.

Als Photoblinken versteht man das Emittieren von Photonen für einen bestimmten Zeitraum im Wechsel mit einem Dunkelzustand. Ein Elektron eines fluoreszierenden Stoffes, welcher durch ein Anregungslicht bestrahlt wird, wird auf ein höheres Energieniveau gehoben und gibt bei der Rückkehr auf das energetisch niedrigere Niveau ein Photon ab. Das passiert allerdings nicht kontinuierlich, sondern zwischenzeitlich gibt es Phasen, den sogenannten Dunkelzustand, in dem keine Photonen emittiert werden. Bei diesem Dunkelzustand kann es sich beispielsweise um einen sogenannten Triplet-Zustand handeln oder einen anderen Zustand, aus dem heraus keine Fluoreszenzemission stattfinden kann. Sorgt man bei Beobachtung der Fluorophore dafür, dass die Detektionszeit so klein wird, dass nur ein Photon innerhalb der Detektionszeit auf den Empfänger trifft, führt dies zu einer hierfür typischen an-aus-Erscheinung. Die Zeitskalen dieser Erscheinung und ihre genauen Ursachen sind vielfältig und auch nicht bis ins letzte Detail bekannt. Wenn man voraussetzt, dass sich die Fluorophore statisch verhalten, das heißt ihre Anzahl innerhalb eines Pixels bleibt wenigstens über die Pixelverweilzeit unverändert, können bei einer kleinen Verweilzeit aufgrund des Blinkens zyklische Intensitätsschwankungen detektiert werden.

Unter dem Photobleichen versteht man den irreversiblen Übergang eines Fluorophors in einen nicht-fluoreszierenden Zustand. Auch hierfür sind die Zeitskalen und Ursachen vielfältig und nicht bis ins letzte Detail bekannt. Bekannt ist die Abhängigkeit des Photobleichens von der Intensität des Anregungslichtes. Vor allem bei der typischerweise starken Fokussierung von Anregungslicht in die Probe, bei einem konfokalen Laser-Scanning-Mikroskop, ist das Photobleichen ein sehr schnell voranschreitender Prozess. Generell ist Photobleichen in der Fluoreszenzmikroskopie ein unerwünschter Vorgang, da er zur Verringerung des Fluoreszenzsignals mit fortschreitender Beobachtungsdauer führt.

Es ist auch bekannt, dass die beiden Erscheinungen (Photobleichen und Photoblinken) für unterschiedliche fluoreszierende Stoffe und bei unterschiedlichen Umgebungsbedingungen (Temperatur, ph-Wert, Sauerstoffkonzentration) in unterschiedlicher Ausprägung auftreten.

Sowohl das Photoblinken als auch das Photobleichen führen zu einem verschlechterten Gesamtsignal, da weniger Emissionslicht, welches durch die Summe der Photonen gebildet wird, detektiert wird und sich somit das Signal-Rausch-Verhältnis verschlechtert.

Zur Durchführung eines erfindungsgemäßen Verfahrens ist es nicht erforderlich, die Zeitskalen und den Ablauf dieser genannten oder gegebenenfalls auch anderer stattfindender korrelierender Prozesse zu kennen, sondern nur die Tatsache, dass diese stattfinden und für die Signalverarbeitung genutzt werden.

Die korrelierenden Prozesse werden für die Signalverarbeitung genutzt, indem eine Gesamtamplitude jeweils für ein Pixel nicht gemäß dem Stand der Technik z. B. über eine Mittelwertbildung einer Folge von Amplituden gebildet wird, sondern über Autokorrelation der Folge von Amplituden.

Die Autokorrelation ist grundsätzlich aus der Signalverarbeitung bekannt und beschreibt die Korrelation eines Signals (Funktion) oder einer Folge von Amplituden mit sich selbst zu einem früheren Zeitpunkt.

Die Anwendung von Autokorrelationsverfahren ist auch aus der Fluoreszenzkorrelationsspektroskopie bekannt, bei der aus der Veränderung der Intensität des Emissionslichtes als Funktion über die Zeit Informationen gewonnen werden. Es wird eine Korrelationsfunktion über eine Zeitverschiebung der mit sich selbst korrelierenden Funktion gebildet. Aus der gebildeten Korrelationsfunktion kann z. B. die Diffusionszeit abgeleitet werden, die der Zeit entspricht, in der die Korrelationsamplitude von einem Maximum bei einer nur minimalen Zeitverschiebung zwischen den korrelierenden Funktionen auf einen bestimmten, z. B. den halben Betrag abfällt.

Das erfindungsgemäße Verfahren wird nachfolgend anhand eines Ausführungsbeispiels mithilfe von Zeichnungen näher erläutert. Hierzu zeigen:

Fig. 1    eine Darstellung der Strahlungsintensität (Amplitude) I(t) des Fluoreszenzlichtes in Abhängigkeit der Zeit t über eine Pixelverweilzeit T,

Fig. 2a    ein visualisiertes digitales Fluoreszenzbild, bei dem die den Grauwert der Bildpixel bestimmenden Gesamtamplituden durch Mittelwertbildung gemäß dem Stand der Technik ermittelt wurden (verschiedene Grauwerte wurden hier durch verschiedene Schraffuren dargestellt),

Fig. 2b    ein visualisiertes digitales Fluoreszenzbild, bei dem die den Grauwert der Bildpixel bestimmenden Gesamtamplituden durch Mittelwertbildung gemäß dem Stand der Technik ermittelt wurden (verschiedene Grauwerte wurden hier durch verschiedene Grauwertstufen dargestellt),

Fig. 3a    ein visualisiertes digitales Fluoreszenzbild, bei dem die den Grauwert der Bildpixel bestimmenden Gesamtamplituden erfindungsgemäß durch Autokorrelation ermittelt wurden (verschiedene Grauwerte wurden hier durch verschiedene Schraffuren dargestellt), und

Fig. 3b    ein visualisiertes digitales Fluoreszenzbild, bei dem die den Grauwert der Bildpixel bestimmenden Gesamtamplituden erfindungsgemäß durch Autokorrelation ermittelt wurden (verschiedene Grauwerte wurden hier durch verschiedene Grauwertstufen dargestellt).

Ein erfindungsgemäßes Verfahren ist bis hin zur Gewinnung von Amplituden, die einzelnen Messzeitpunkten innerhalb einer Pixelverweilzeit zugeordnet sind, gleich dem im Stand der Technik beschriebenen Verfahren mit Digitalisierung eines analogen Detektorsignals durch schnelles Abtasten (sampling).

Es ist wesentlich, dass das analoge Detektorsignal durch mehrfaches Abtasten (Auslesen des Detektors) in eine Folge einer großen Vielzahl von Amplituden digitalisiert wird. Das ist praktisch nur mit Einzeldetektoren und daher mit einem Laser-Scanning-Mikroskop möglich, welches typischerweise als Singlespot-Anordnung, aber auch als Multispot-Anordnung ausgeführt sein kann, bei der zeitgleich z. B. vier getrennte Strahlen gleichzeitig über die Probe gerastert werden, sodass Fluoreszenzstrahlung von vier zugeordneten Einzeldetektoren detektiert wird. Prinzipiell kann ein Objektfeld, anstatt pixelweise mit Anregungslicht beaufschlagt zu werden, auch zeitgleich ausgeleuchtet werden und währenddessen kann eine Detektoranordnung einer Kamera mehrfach ausgelesen werden. Praktisch werden aber mit typischen Kameras die für die Erfassung des Photoblinkens erforderlichen kurzen Detektionszeiten im μs-Bereich nicht erreicht. Zudem sind hierfür die Strahlungsintensitäten, wie sie auf jeweils ein Pixel treffen würden, und die Anzahl der möglichen Messzeitpunkte zu gering, um ausreichend viele und hohe Amplituden für eine Autokorrelation zu gewinnen.

Zur Erzeugung eines Fluoreszenzbildes wird ein Anregungslicht, von einer Anregungslichtquelle kommend, in eine Objektebene, die innerhalb oder auf einer Probe, die mit einem fluoreszierenden Farbstoff markiert wurde, liegt, mittels eines Scan-Systems nacheinander jeweils über eine Pixelverweilzeit T in einzelne Objektfeldausschnitte (Pixel) fokussiert. Dabei werden die Fluorophore in dem jeweils betreffenden Pixel zur Abgabe von Emissionslicht anregt. Die Intensität des von einem Pixel während der Pixelverweilzeit T kommenden Emissionslichtes, bestimmt durch die Anzahl der abgegebenen Photonen, wird über einen Detektor erfasst.

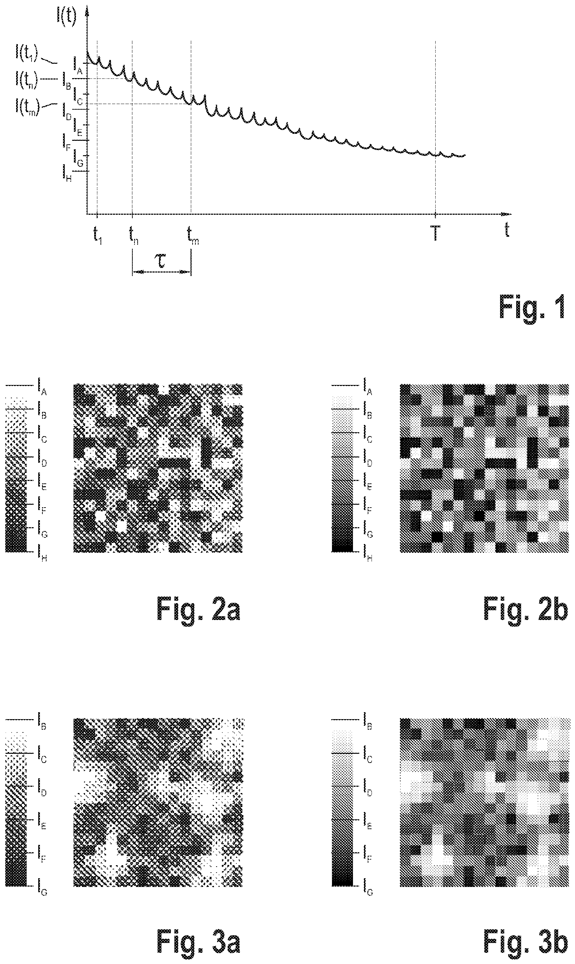

In Fig. 1 ist das analoge Signal der Strahlungsintensität I(t) des Fluoreszenzlichtes in Abhängigkeit der Zeit t über die Pixelverweilzeit T dargestellt. Es unterliegt einer Funktion, verursacht durch das Photobleichen, die einer abfallenden Exponentialfunktion ähnlich ist, und einer auf einer kürzeren Zeitskala fluktuierenden Funktion, verursacht durch das Photoblinken.

In einem A/D-Wandlungsprozess wird zu mehreren Messzeitpunkten, deren Abstand zueinander durch die Detektionszeit bestimmt ist, der Detektor ausgelesen und pro Messzeitpunkt eine Amplitude gebildet. Das analoge Signal der Intensität des Emissionslichtes über die Pixelverweilzeit T wird somit in ein digitales Signal gewandelt, mit einer Folge von Amplituden, die proportional zu den Intensitäten sind, die jeweils während einer Detektionszeit detektiert werden, und einem Messzeitpunkt zugeordnet sind. Je kürzer die Detektionszeit im Verhältnis zur Pixelverweilzeit T ist, desto höher ist die Abtastfrequenz und somit die Auflösung der analogen Funktion.

Die einem Messzeitpunkt zugeordnete Intensität wird durch die Summe aus den auftreffenden Photonen sowie den üblichen Rauschbeiträgen in der dem jeweiligen Messzeitpunkt zugeordneten Detektionszeit gebildet.

Nach eine Pixelverweilzeit T liegt somit für ein Pixel eine Vielzahl von Amplituden vor, die durch ihre Zuordnung jeweils zu einem Messzeitpunkt eine Folge bilden. Im Unterschied zum Stand der Technik, bei dem eine Gesamtamplitude aus dem Mittelwert aller Amplituden als Mittelwertamplitude gebildet wird, wird gemäß einem erfindungsgemäßen Verfahren durch Autokorrelation der Folge der Amplituden mit sich selbst um einen Zeitversatz $\tau$ verschoben eine Korrelationsamplitude $K_\tau$ gebildet. Der Zeitversatz $\tau$ soll hier dimensionslos als Anzahl von Messpunkten zwischen der mit sich selbst zu korrelierenden Folge von Amplituden verstanden werden. Das heißt es soll die Folge von Amplituden beginnend zu dem ersten Messzeitpunkt $t_1$ und beginnend zu dem zwanzigsten Messzeitpunkt $t_{20}$ korreliert werden, dann ist der Zeitversatz $\tau$ gleich 19. Die tatsächliche Dauer des Zeitversatzes $\tau$ ergibt sich aus der Detektionszeit und dem Zeitversatz $\tau$.

Es werden die Amplituden, jeweils ein Amplitudenpaar bildend, früherer Messzeitpunkte $t_n$ und späterer Messzeitpunkte $t_m$ mit einem festen Zeitversatz $\tau$, sodass m = n + $\tau$ ist, fortlaufend zueinander korreliert. Der Übersichtlichkeit halber wird die Amplitude auch nach Wandlung des optischen in ein elektrisches Signal mit I(t) bezeichnet. Die Korrelationsamplitude $K_\tau$ ergibt sich jeweils für einen Zeitversatz (timelag) $\tau$ aus der Korrelation der früheren Amplituden $I(t_n)$ und der späteren Amplituden $I(t_m)$, deren Messzeitpunkte den Zeitversatz $\tau$ zueinander aufweisen, und dem Mittelwert der Amplituden $I_{mittel}$ nach folgender Formel:

$$K_\tau = ((I(t_n) - I_{mittel}) \times (I(t_m) - I_{mittel}))_{mittel}$$

Vorteilhaft kann die Korrelationsamplitude $K_\tau$ normiert werden, zum Beispiel mit dem quadratischen Mittelwert der Amplituden (Mittelwertamplitude), womit sich folgende Formel ergibt:

$$K_\tau = ((I(t_n) - I_{mittel}) \times (I(t_m) - I_{mittel}))_{mittel} / I_{mittel}^2$$

oder mit dem quadratischen Maximalwert der Amplituden, womit sich folgende Formel ergibt:

$$K_\tau = ((I(t_n) - I_{mittel}) \times (I(t_m) - I_{mittel}))_{mittel} / I_{max}^2$$

Zu jedem späteren Messzeitpunkt $t_m$ wird ein Produkt aus der Differenz zwischen der Amplitude $I(t_n)$ zum zugehörigen früheren Messzeitpunkt $t_n$ und dem Mittelwert aller Amplituden $I_{mittel}$ und der Differenz zwischen der Amplitude $I(t_{n+\tau})$ zum jeweiligen späteren Messzeitpunkt $t_{n+\tau}$ und dem Mittelwert aller Amplituden $I_{mittel}$ gebildet. Es entsteht eine Folge den späteren Messzeitpunkten $t_m$ zugeordneter Produktwerte, deren Mittelwert die Korrelationsamplitude $K_\tau$

darstellt. Die so erhaltene Korrelationsamplitude $K_\tau$ ist frei von Rauschen, da dies keiner Korrelation unterliegt.

Beispielsweise bei einem $256 \times 256$ Pixel-Scan mit 1 Bild/s ergeben sich bei einer Pixelverweilzeit von T = 15 $\mu$s und einer Abtastfrequenz von 40 MHz 610 Messzeitpunkte. Damit stehen 610 Amplituden $I(t_n)$ sogenannter früherer Messzeitpunkte $t_n$ zur Verfügung, wobei $1 \leq n \leq 610$.

Um zur Bestimmung der Korrelationsamplitude $K_\tau$ eine hohe Anzahl von Amplituden $I(t_{n+\tau})$ sogenannter späterer Messzeitpunkte $t_m$ zur Autokorrelation zur Verfügung zu haben, sollte die Dauer des Zeitversatzes $\tau$ bevorzugt kleiner als die halbe Pixelverweilzeit T, aber auch größer einem Fünftel der Pixelverweilzeit T sein. Im vorliegenden Beispiel könnte demnach der Zeitversatz $\tau$ vorteilhaft der Anzahl der Messzeitpunkte zwischen dem ersten Messzeitpunkt $t_1$ und dem einhundertzwanzigsten Messzeitpunkt $t_{120}$ entsprechen, womit der Zeitversatz $\tau$ gleich 119 wäre. In diesem Fall würden 410 Amplitudenpaare korreliert werden.

Grundsätzlich kann der Zeitversatz $\tau$ jedoch auch sehr klein sein, bezogen auf das Ausführungsbeispiel bis hin zu ca. 10, oder auch sehr groß, bis hin zu ca. 550.

Digitale Fluoreszenzbilder werden üblicherweise als Rastergrafik dargestellt und gespeichert, das heißt die den Pixeln zugeordneten Amplituden werden in einem zu der Anordnung der Pixel in der Objektebene korrelierenden Raster abgespeichert.

Es ist sinnvoll für die Erstellung von Fluoreszenzbildern, die für mit unterschiedlichen fluoreszierenden Stoffen versehene Proben erstellt werden sollen, über Versuche jeweils einen optimalen Zeitversatz $\tau$ zu ermitteln, für den die sich ergebende Korrelationsamplitude $K_\tau$ möglichst groß ist, und die Dauer für den optimalen Zeitversatz $\tau$ in einer Datenbank abzulegen.

Dazu können automatisiert kurze lokale Messungen an einzelnen Pixeln, insbesondere in einem Bereich der Objektebene vorgenommen werden, in dem hohe Fluoreszenzsignale erwartet werden, und die dabei gewonnenen Amplituden wie oben beschrieben für unterschiedliche Zeitversatze $\tau$ verrechnet werden. Diese lokalen Messungen können automatisch stochastisch oder äquidistant über den Objektbereich verteilt werden. Die Orte der lokalen Messungen können aber auch durch den Anwender vorgegeben werden, um besonders relevante Probenregionen zu analysieren.

Die Dauer für den optimalen Zeitversatz $\tau$ kann auch aus einer Datenbank ermittelt werden. Charakteristische Photoblink-Zeiten sind für viele typische Farbstoffe aus der Literatur bekannt und stellen die optimale Dauer eines Zeitversatzes $\tau$ dar. Diese Literaturwerte können einem fluoreszierenden Stoff zugeordnet in der Datenbank abgelegt werden, um für das Mikroskopieren späterer Proben mit einem gleichen fluoreszierenden Stoff in Kenntnis der Detektionszeit zumindest einen Start-Zeitversatz ableiten zu können.

Die Mittelwertbildung als Stand der Technik findet i.d.R. auf einem FPGA (Field Programmable Gate Array) statt. Ebenso kann die Bildung der Autokorrelationsamplituden auf einem FPGA implementiert werden.

Auch können aus ein- und demselben digitalen Detektorsignal, gebildet durch die den Messzeitpunkten während einer Pixelverweilzeit T jeweils zugeordneten Amplituden I, parallel oder nacheinander die Gesamtamplituden durch Mittelwertbildung und Autokorrelation ermittelt werden und als Fluoreszenzbild dargestellt werden.

Wie erläutert kann die Korrelationsamplitude $K_\tau$ für ein Pixel für verschiedene Zeitversatze $\tau$ ermittelt und eine von denen für die Darstellung des Fluoreszenzbildes verwendet werden. Auch können pro Pixel für die Darstellung des Fluoreszenzbildes mehrere für unterschiedliche Zeitversatze $\tau$ berechnete Korrelationsamplituden $K_\tau$ aufsummiert und/oder gemittelt werden. So kann insbesondere bei einer a priori nicht bekannten optimalen Dauer des Zeitversatzes $\tau$ das Signal-Rausch-Verhältnis weiter verbessert werden.

In den Fig. 2a und 2b wurde jeweils ein Fluoreszenzbild dargestellt, wie es gemäß dem Stand der Technik über die Zuordnung einer Mittelwertamplitude pro Pixel entsteht. Die Darstellungen unterscheiden sich dadurch, dass unterschiedlich hohe Mittelwertamplituden zum einen durch unterschiedliche Schraffuren und zum anderen durch unterschiedliche Grauwerte dargestellt wurden.

In den Fig. 3a und 3b wurde jeweils ein Fluoreszenzbild dargestellt, wie es gemäß der Erfindung über die Zuordnung einer Korrelationsamplitude $K_\tau$ pro Pixel entsteht. Die Darstellungen unterscheiden sich dadurch, dass unterschiedlich hohe Mittelwertamplituden zum einen durch unterschiedliche Schraffuren und zum anderen durch unterschiedliche Grauwerte dargestellt wurden.

In den Fig. 3a und 3b ist eine sogenannte Clusterbildung erkennbar, die auf eine lokale Konzentration der fluoreszierenden Stoffe in der Objektebene hinweist. Eine solche Clusterbildung ist in den Fig. 2a und 2b aufgrund der Überlagerung des Fluoreszenzsignals und des Rauschens nicht erkennbar.

**Patentansprüche**

1. Verfahren zur Erzeugung eines digitalen Fluoreszenzbildes, bei dem eine mit einem fluoreszierenden Stoff versehene Probe in einer Objektebene eines Laser-Scanning-Mikroskops angeordnet und zeitlich nacheinander pixelweise über eine Pixelverweilzeit (T) mit einem Anregungslicht beaufschlagt wird, wodurch pro Pixel ein Emissionslicht generiert wird, welches durch einen Detektor detektiert und durch schnelles Abtasten (sampling) in ein digitales Signal in Form einer Folge von jeweils einem Messzeitpunkt zugeordneten Amplituden (I) gewandelt wird, aus denen eine Gesamtamplitude gebildet wird, und die Gesamtamplituden aller Pixel zu einem Fluoreszenzbild zusammengefügt werden, **dadurch gekennzeichnet, dass** pro Pixel die Folge von Amplituden (I) beginnend zu einem späteren Messzeitpunkt ($t_m$) mit derselben Folge von Amplituden (I) beginnend zu einem früheren Messzeitpunkt ($t_n$), der zu dem späteren Messzeitpunkt ($t_m$) einen Zeitversatz ($\tau$) aufweist, wenigstens einmal autokorreliert wird, jeweils wenigstens eine für den Zeitversatz ($\tau$)spezifische Korrelationsamplitude ($K_\tau$) gebildet wird und die Gesamtamplitude aus der wenigstens einen gebildeten Korrelationsamplitude ($K_\tau$) ermittelt wird.

2. Verfahren nach Anspruch 1, **dadurch gekennzeichnet, dass** die Korrelationsamplitude ($K_\tau$) mit der Formel:

$$K_\tau = ((I(t_n) - I_{mittel}) \times (I(t_m) - I_{mittel}))_{mittel}$$

berechnet wird, wobei $I(t_n)$ die Amplituden (I) der früheren Messzeitpunkte ($t_n$), $I(t_m)$ die Amplituden (I) der späteren Messzeitpunkte ($t_m$) sind, $m = n + \tau$, und $I_{mittel}$ ein Mittelwert der Amplituden (I) ist.

3. Verfahren nach Anspruch 2, **dadurch gekennzeichnet, dass** die Korrelationsamplitude ($K_\tau$) durch Division mit dem quadratischen Mittelwert der Amplituden (I) normiert wird.

4. Verfahren nach einem der vorherigen Ansprüche, **dadurch gekennzeichnet, dass** die Korrelationsamplitude ($K_\tau$) für verschiedene Zeitversatze ($\tau$) berechnet wird und derjenige Zeitversatz ($\tau$) mit der vergleichsweise größten Korrelationsamplitude ($K_\tau$) festgestellt und als Gesamtamplitude verwendet wird.

5. Verfahren nach Anspruch 4, **dadurch gekennzeichnet, dass** der Zeitversatz ($\tau$) mit der vergleichsweise größten Gesamtamplitude dem fluoreszierenden Farbstoff zugeordnet und in einer Datenbank abgelegt wird.

6. Verfahren nach einem der Ansprüche 1 bis 3, **dadurch gekennzeichnet, dass** die Korrelationsamplitude ($K_\tau$) für verschiedene Zeitversatze ($\tau$) berechnet wird und der Mittelwert der Korrelationsamplituden ($K_\tau$) festgestellt und als Gesamtamplitude verwendet wird.

7. Verfahren nach einem der Ansprüche 1 bis 3, **dadurch gekennzeichnet, dass** die Korrelationsamplitude ($K_\tau$) für verschiedene Zeitversatze ($\tau$) berechnet wird und die Summe der Korrelationsamplituden ($K_\tau$) festgestellt und als Gesamtamplitude verwendet wird.

8. Verfahren nach einem der vorherigen Ansprüche, **dadurch gekennzeichnet, dass** die Anzahl der Messzeitpunkte größer 400 und der Zeitversatz ($\tau$) zwischen 50 und 150 liegt.

**Claims**

1. A method for generating a digital fluorescence image, wherein a sample provided with a fluorescent substance is arranged in an object plane of a laser-scanning microscope and is acted upon by excitation light in a time sequence, pixel-by-pixel over a pixel dwell time (T), whereby an emission light is generated per pixel, said emission light being detected by a detector and converted, by quick sampling, into a digital signal in the form of a sequence of amplitudes (I), which are each associated with a respective measuring time and from which a total amplitude is formed, and the total amplitudes of all pixels are combined into a fluorescence image, **characterised in that** for each pixel, the sequence of amplitudes (I) beginning at a later measuring time ($t_m$) is autocorrelated at least once with the same sequence of amplitudes (I) beginning at an earlier measuring time ($t_n$), which has a time lag ($\tau$) with respect to the later measuring time ($t_m$), at least one respective specific correlation amplitude ($K_\tau$) is formed for the time lag ($\tau$) and the total amplitude is determined from the at least one correlation amplitude ($K_\tau$) formed.

2. The method according to claim 1, **characterised in that** the correlation amplitude ($K_\tau$) is calculated using the formula:

$$K_\tau = ((I(t_n) - I_{mean}) \times (I(t_m) - I_{mean}))_{mean}$$

wherein $I(t_n)$ represents the amplitudes (I) of the earlier measuring times ($t_n$) $I(t_m)$ represents the amplitudes (I) of the later measuring times ($t_m$), m = n + $\tau$, and $I_{mean}$ is a mean value of the amplitudes (I).

3. The method according to claim 2, **characterised in that** the correlation amplitude ($K_\tau$) is standardised by dividing it by the root mean square of the amplitudes (I).

4. The method according to any one of the preceding claims, **characterised in that** the correlation amplitude ($K_\tau$) is calculated for different time lags ($\tau$) and the time lag ($\tau$) having the comparatively largest correlation amplitude ($K_\tau$) is determined and used as the total amplitude.

5. The method according to claim 4, **characterised in that** the time lag ($\tau$) with the comparatively largest total amplitude is associated with the fluorescent dye and stored in a database.

6. The method according to any one of claims 1 to 3, **characterised in that** the correlation amplitude ($K_\tau$) is calculated for different time lags ($\tau$) and the mean value of the correlation amplitudes ($K_\tau$) is determined and used as the total amplitude.

7. The method according to any one of claims 1 to 3, **characterised in that** the correlation amplitude ($K_\tau$) is calculated for different time lags ($\tau$) and the sum of the correlation amplitudes ($K_\tau$) is determined and used as the total amplitude.

8. The method according to any one of the preceding claims, **characterised in that** the number of measuring times is greater than 400 and the time lag ($\tau$) is between 50 and 150.

**Revendications**

1. Procédé pour générer une image de fluorescence numérique, dans lequel un échantillon pourvu d'une substance fluorescente est disposé dans un plan objet d'un microscope à balayage laser et est exposé successivement dans le temps, pixel par pixel, à une lumière d'excitation pendant un temps de séjour (T) du pixel, ce qui génère une lumière d'émission par pixel, qui est détectée par un détecteur et convertie par un balayage rapide (sampling) en un signal numérique sous la forme d'une séquence d'amplitudes (I) respectivement associées à un instant de mesure, à partir desquelles une amplitude totale est formée, et les amplitudes totales de tous les pixels sont réunies en une image de fluorescence, **caractérisé en ce que**,
pour chaque pixel, la séquence d'amplitudes (I) commençant à un instant de mesure ultérieur ($t_m$) est autocorrélée au moins une fois avec la même séquence d'amplitudes (I) commençant à un instant de mesure antérieur ($t_n$), qui présente un décalage temporel (t) par rapport à l'instant de mesure ultérieur ($t_m$), respectivement au moins une amplitude de corrélation ($K_\tau$) spécifique au décalage temporel ($\tau$) est formée et l'amplitude totale est déterminée à partir de ladite au moins une amplitude de corrélation ($K_\tau$) formée.

2. Procédé selon la revendication 1, **caractérisé en ce que** l'amplitude de corrélation ($K_\tau$) est déterminée par la formule :

$$K_\tau = ((I(t_n) - I_{moyen}) \times (I(t_m) - I_{moyen}))_{moyen}$$

où $I(t_n)$ représente les amplitudes (I) des instants de mesure antérieurs ($t_n$), $I(t_m)$ représente les amplitudes (I) des instants de mesure ultérieurs ($t_m$), m = n + $\tau$, et $I_{moyen}$ est une valeur moyenne des amplitudes (I).

3. Procédé selon la revendication 2, **caractérisé en ce que** l'amplitude de corrélation ($K_\tau$) est normalisée par division par la moyenne quadratique des amplitudes (I).

4. Procédé selon l'une quelconque des revendications précédentes, **caractérisé en ce que** l'amplitude de corrélation ($K_\tau$) est calculée pour différents décalages temporels ($\tau$) et que celui des décalages temporels ($\tau$) qui présente l'amplitude de corrélation ($K_\tau$) comparativement la plus grande est déterminé et utilisé comme amplitude totale.

5. Procédé selon la revendication 4, **caractérisé en ce que** le décalage temporel ($\tau$) ayant l'amplitude totale comparativement la plus grande est attribué au colorant fluorescent et est enregistré dans une base de données.

6. Procédé selon l'une quelconque des revendications 1 à 3, **caractérisé en ce que** l'amplitude de corrélation ($K_\tau$) est calculée pour différents décalages temporels ($\tau$) et la valeur moyenne des amplitudes de corrélation ($K_\tau$) est

déterminée et utilisée comme amplitude totale.

7. Procédé selon l'une quelconque des revendications 1 à 3, **caractérisé en ce que** l'amplitude de corrélation ($K_\tau$) est calculée pour différents décalages temporels ($\tau$) et la somme des amplitudes de corrélation ($K_\tau$) est déterminée et utilisée comme amplitude totale.

8. Procédé selon l'une quelconque des revendications précédentes, **caractérisé en ce que** le nombre d'instants de mesure est supérieur à 400 et le décalage temporel ($\tau$) est compris entre 50 et 150.

Fig. 1

Fig. 2a

Fig. 2b

Fig. 3a

Fig. 3b

**IN DER BESCHREIBUNG AUFGEFÜHRTE DOKUMENTE**

**In der Beschreibung aufgeführte Patentdokumente**

- US 2010303386 A1